# EUROPEAN PATENT SPECIFICATION

(11) **EP 3 478 006 B1**
(45) Date of publication and mention of the grant of the patent: **29.09.2021**
(21) Application number: 17198998.1
(22) Date of filing: 27.10.2017
(51) Int. Cl.: H04W 60/02, H04W 88/14, H04W 28/02, H04W 24/06, H04L 12/825, H04L 12/855

(54) **NETWORK ENTITY FOR CONTROLLING COMMUNICATIONS FOR A PLURALITY OF USER EQUIPMENT DEVICES IN A COMMUNICATION NETWORK, USER EQUIPMENT DEVICE, METHOD AND COMPUTER PROGRAM PRODUCT**
NETZWERKEINHEIT ZUR STEUERUNG VON KOMMUNIKATIONEN FÜR EINE VIELZAHL VON BENUTZERGERÄTEVORRICHTUNGEN IN EINEM KOMMUNIKATIONSNETZWERK, BENUTZERGERÄTEVORRICHTUNG, VERFAHREN UND COMPUTERPROGRAMMPRODUKT
ENTITÉ DE RÉSEAU POUR COMMANDER DES COMMUNICATIONS POUR UNE PLURALITÉ DE DISPOSITIFS D'ÉQUIPEMENT UTILISATEUR DANS UN RÉSEAU DE COMMUNICATION, DISPOSITIF D'ÉQUIPEMENT UTILISATEUR, PROCÉDÉ ET PRODUIT-PROGRAMME INFORMATIQUE

(43) Date of publication of application: 01.05.2019
(73) Proprietor: Deutsche Telekom AG, 53113 Bonn (DE)
(72) Inventor: SCHULZ, Mario, 04643 Geithain (DE)
(74) Representative: Braun-Dullaeus Pannen Emmerling Patent- & Rechtsanwaltspartnerschaft mbB

(56) References cited:
- WO-A1-2017/147735
- US-A1- 2010 002 582
- US-A1- 2012 208 472
- US-A1- 2014 204 931
- US-A1- 2016 073 338
- US-A1- 2016 100 362
- NTT DOCOMO: "Comparison of Architecture Alternatives", 3GPP DRAFT; S2-084205_WAS_4178_WAS_S2-083796_RED_EVALU ATION_TABLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080519, 19 May 2008 (2008-05-19), XP050266340, [retrieved on 2008-05-19]

## Description

The present disclosure relates to a network entity for controlling signaling efficiency in a communication network.

In a communication network, especially a mobile communication network, a plurality of devices, especially user equipment devices, are arranged in network cells. A control entity of the communication network may be a mobility management entity, MME. The user equipment devices may communicate with the MME via an e-Node B, eNB.

To transmit a status of the user equipment devices, each user equipment device periodically sends a status signal to the MME.

The status signals may be tracking area updates, TAU. Those status signals may be triggered by a tracking area update timer. The tracking area update timer may be a standard periodic tracking area update timer or a long periodic tracking area update timer.

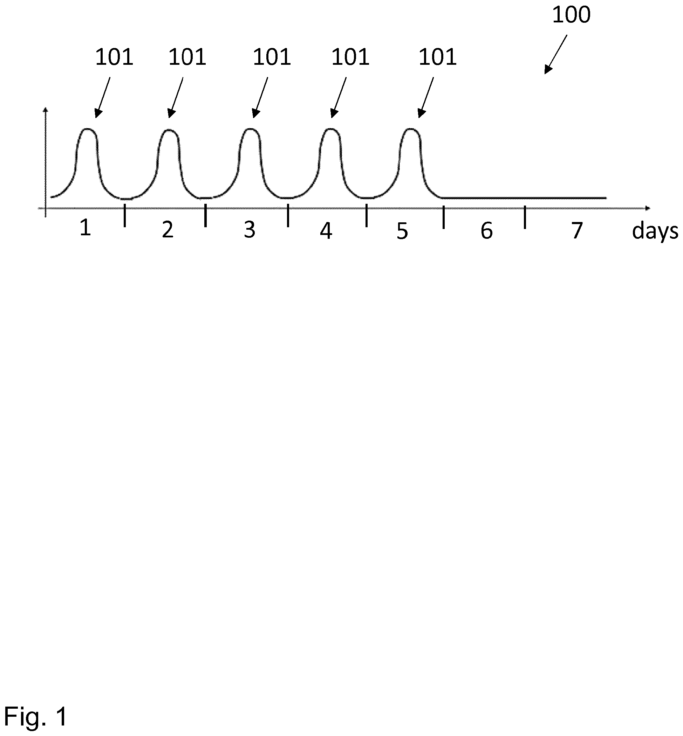

The user equipment devices, especially for IOT/M2M Use-cases, may be installed by a technician during his working day. Usually, a working day is from Monday to Friday and on each day from 7 a.m. to 5 p.m. During this time, the technician activates the user equipment devices. Fig. 1 shows a graph 100 with an exemplary curve of a distribution of deploying times of user equipment device in a week period. The graph 100 has peaks 101. On five days in a row, the working days, a peak 101 occurs. On days 6 and 7, the amount of deployed user equipment devices is very low. These days are weekend days.

Therefore, the timers start working in this period of time. The tracking area update timers have the same or nearly the same time period. Therefore, the status signals, which are triggered by the periodic TAU timer, are sent during this working day rhythm.

This may result in load peaks in the capacity of the communication network. According to Fig. 1, these load peaks occur at the shown peaks according to the deployed user equipment devices.

The height of the peaks is dependent on the number of user equipment devices in the communication network. Many user equipment devices, for example hundred thousands of user equipment devices, may result in a significant reduction of the usable capacity in the communication network.

Document US 2012/0208472 A1 describes and apparatus and method for controlling tracking area update in a wireless communication system.

US 2010/0002582 A1 discloses an apparatus and method for managing access and update requests in a wireless network.

Document US 2014/0204931 A1 discloses techniques for update procedure signaling in a wireless network.

From document US 2016/0100362 it is known a service capability server and evolved packet core coordination power saving mode and paging.

WO2017/147735 A1 teaches a method and apparatus for setting a periodic location update timer, and a network device, relating to the technical field of networks.

US 206/073338 A1 teaches a method for supporting a power saving mode (PSM) in a radio device. According to the method, the radio device may transmit a first message including a first activation time value to a network entity when the radio device requires the PSM. Then, the radio device may receive a second message including a second activation time value from the network entity. The radio device may enter a PSM state on the basis of the second activation time value. When it is necessary to stop the PSM or change the second activation time, the radio device may transmit a third message at the very time point.

It is an objective of the invention to describe an improved concept for communication network.

This object is achieved by the features of the independent claims. Hence, the invention is defined by the appended claims. Further embodiments are described in the dependent claims, the description as well as in the figures.

According to a first aspect, the objective is solved by a network entity for controlling communications of a plurality of user equipment devices in a communication network. Each user equipment device is configured to periodically transmit a status signal indicating a status of the user equipment device. The network entity comprises a communication interface being configured to receive a first number of status signals within a first reception interval. The communication interface is configured to receive a second number of status signals within a second reception interval, wherein the first number of status signals comprises a status signal of a certain user equipment device. The network entity comprises a processor. The processor is configured to generate a control signal instructing the certain user equipment device to amend a time of periodic transmission of the status signal if the first number of status signals is greater than the second number of status signals. The communication interface is configured to transmit the control signal over the communication network towards the certain user equipment device.

The inventive concept is now described, by way of example, with reference to the accompanying drawings, in which:
- Fig. 1: shows a schematic diagram of a deploying distribution of user equipment devices;
- Fig. 2: shows a schematic diagram of a system according to an example that is not part of the invention;
- Fig. 3: shows a schematic flow diagram of a method according to an example that is not part of the invention;
- Fig. 4: shows a schematic diagram of a distribution of transmissions in a communication network according to an example that is not part of the invention; and
- Fig. 5: shows a schematic flow diagram of a method according to an embodiment of the invention.

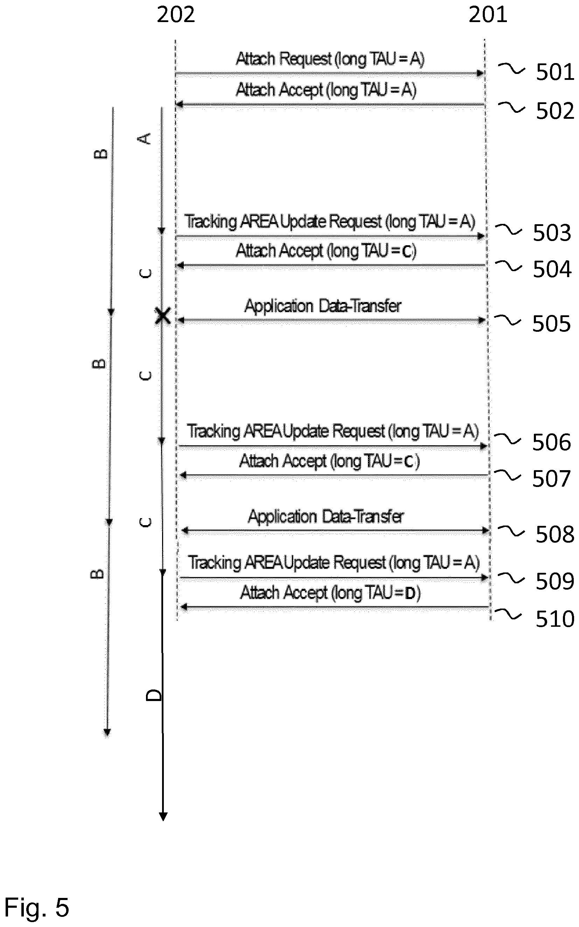

Hence, the embodiment of the invention is presented only in figure 5 and associated passages; all other figures and passages are not part of the invention and are merely useful in order to understand the invention.

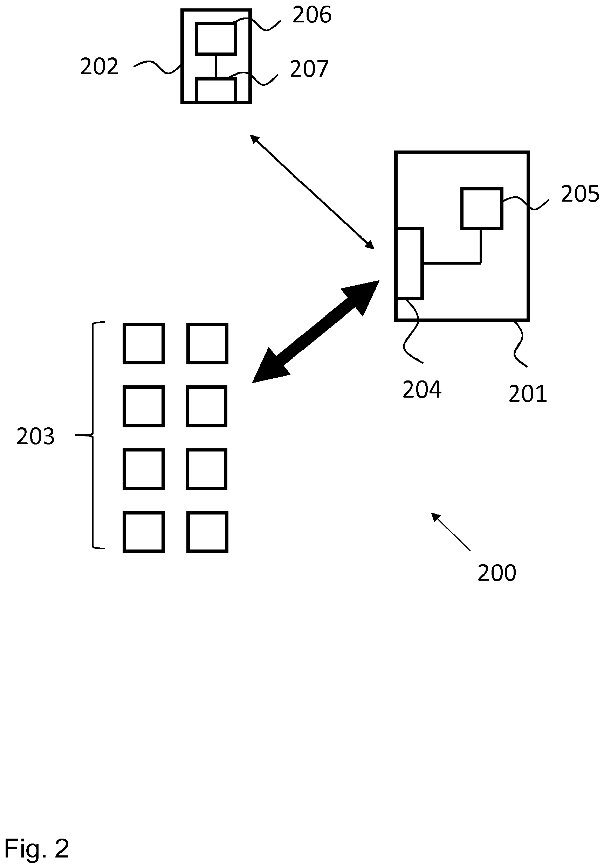

Fig. 2 shows a system 200. A system 200 comprises a network entity 201. The system 200 further comprises a certain user equipment device 202 and a plurality of user equipment devices 203. The network entity 201 comprises a communication interface 204 and a processor 405. The communication interface 204 is configured to communicate with the certain user equipment device 202 and the plurality of user equipment devices 203. This communication may include receiving data signals from and transmitting data signals to the user equipment devices 202, 203, which is depicted in Fig. 2 by the thin and bold arrows.

In the described example, the network entity 201 is a mobile management entity of a mobile communication network, especially of an LTE network. In the described embodiment, the user equipment devices 202, 203 are Internet of Things user equipment devices that are configured to sense user equipment parameters and to transmit these parameters via e-Node B and the network entity 201 into an application server of a customer. In other embodiments, the network entity 201 may be another server that is configured to control communications of a plurality of user equipment devices in a communication network. In another embodiment, the user equipment devices may be other equipment, like mobile phones or processors of a car.

In the described example, the processor 205 is a CPU of a network server. In another embodiment, the processor 205 may be a microcontroller or the CPU of another computer system.

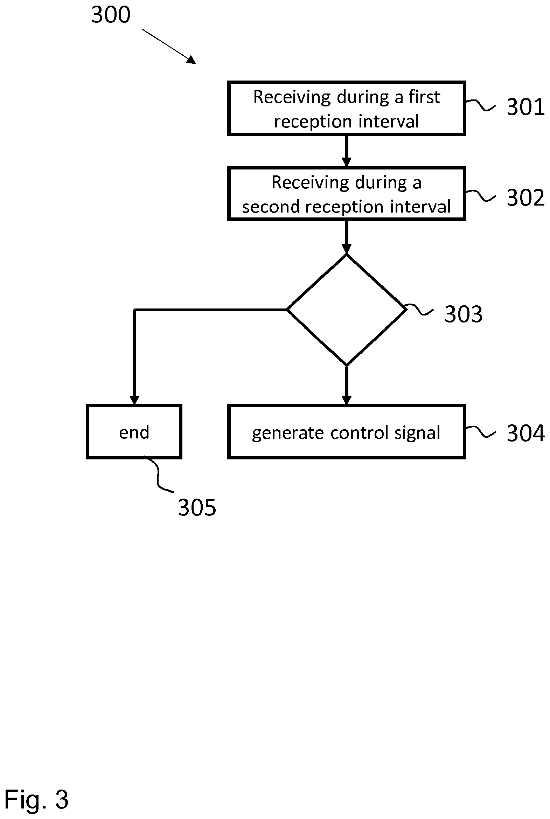

Fig. 3 depicts a schematic flow diagram of a method according to an example that is not part of the invention.

In step 301, the communication interface 204 of the network entity 201 receives a first periodic signal from the certain user equipment device 202. In the described example, the certain user equipment device 202 sends a long periodic tracking area update timer to the network entity 201.

In step 301, the communication interface 204 receives further a first number of status signals within a first reception interval. A first reception interval may be a periodic reception interval, for example the daytime of a working day, i.e. for example from 7 a.m. to 5 p.m. from Monday to Friday.

In step 301, the communication interface 204 received the status signal of a certain user equipment device 202.

In step 302, the communication interface 204 receives a second number of status signals with a second reception interval. The second reception interval may be the rest of the week, i.e. the whole week minus the first reception interval. In the embodiment, the second reception interval may be a nighttime, for example from 5 p.m. to 7 a.m.

In another example, the first and the second reception interval are other time intervals that are non-overlapping. For example the first reception interval is from 10 am to 3 pm and the second reception interval is from 7am to 10 pm and from 3 pm to 10 pm. In this example, the nighttime from 10 pm to 7 am would not be considered for the method.

In step 303, the processor 205 determines if the number of status signals and the first reception interval is bigger than the number of status signals in the second reception interval. If the number of status signals within the first reception interval is bigger than the number of status signals within the second reception interval, the status signal of the certain user equipment device 202 was received at a peak according to the described signal distribution according to Fig. 1.

Then, in a step 304, the processor creates a control signal. The control signal can be a signal that is predefined and configured to be sent as a response to the status signal. The control signal can also be, in another embodiment, a special control signal, and that has the purpose of setting a new transmission time only.

The control signal in the described example is an attach accept signal from the MME to the Ul device.

The control signal contains instructions to amend a time of periodic transmission of the status signal of the certain user equipment device 202. In the described example, the control signal comprises instructions to set a longer period of the TAU timer. In another example, the period of the periodic transmission may be reduced or randomly varied to either increase or reduce the periodic transmission. In another example, a certain transmission time is set, for example 21:13:27 o'clock.

If the determination in step 303 was negative, i.e. if the received status signal of the certain user equipment device 202 was received in the first reception interval, but the number of data signals within the first reception interval is smaller than the second number of status signals within the second reception interval, the periodic transmission does not occur at the peak of the transmitting distribution according to the diagram of Fig. 1. In this case, the processor 205 gives instructions to amend the time of periodic transmission of the status signal.

In another example, the determination in step 303 may be obsolete or the result may be ignored by the processor 205 and the processor 205 always generates a control signal to instruct the certain user equipment device 202 to amend a time of periodic transmission to the status signal.

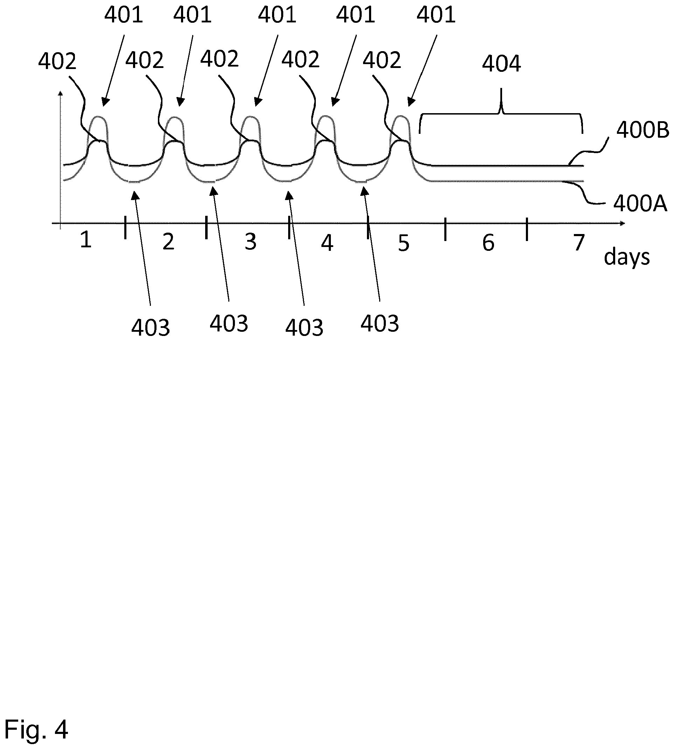

Fig. 4 shows two graphs 400A and 400B of the status signal distribution in the communication network according to the described example. Graph 400A shows an amount of signaling events according to the distribution according to Fig. 1. Graph 400A shows high transmission peaks 401 at certain times during the time period.

Graph 400B shows a graph of a distribution of signaling events according to a communication network with a network entity 201 according to the described example.

The distribution graph of the signaling events shows lower peaks 402 than in an example of Fig. 1.

In the minimum areas 403 and at the weekend period 404, more signaling events occur in graph 400B as a result of the distribution of the signaling messages according to the described method of Fig. 3.

Fig. 5 shows a schematic diagram of signaling events between the certain UE device 202 and the network entity 201.

In step 501, the user equipment device 202 sends an attach request, i.e. a first status signal, to the network entity 201. The network entity 201 sends in step 502 an attach accept signal as a control signal in response to the signal sent in 601.

The TAU timer from the status signal of the certain user equipment device 202 is set to time A. At the time of step 501, the network entity 201 has no information about the transmissions of the certain user equipment device 202, especially of transmitting TAU requests or application data. Therefore, in step 502, the network entity 201 does not yet instruct the user equipment device 202 to use a new timer.

In step 503, the user equipment device 202 sends a tracking area update request with time A.

The processor 205 of the network entity 201 now recognizes that between the sending time of the attach request and the tracking area update request no application data was sent. Also, the processor 205 does not yet know that the certain user equipment device 202 sends application data every time B, it instructs the user equipment device 202 to increase the period of tracking area update requests to time C. Therefore, a new tracking area update request would occur at time C starting from the last tracking are update request in step 603.

In another embodiment, the network entity 201 doesn't set the increased time C and still lets the certain user equipment device transmit with the time period B.

In step 505, the user equipment device 202 starts transferring application data. Transmitting application data restarts the TAU timer of the user equipment device 202. After sending application data in step 505, the TAU timer starts again with time C to send a TAU request to the network entity 201 after the period C. After time C expires, the user equipment device 202 again starts transmitting a TAU request to the network entity 201, and the network entity 201 sends a control signal in response to this TAU request in step 507. In the described embodiment, the TAU timer is still set to transmit in the period C. The network entity waits for another application data transfer to determine a data transfer period. In another embodiment, the TAU timer is increased independently from the application data transfer.

In step 508, the user equipment device 202 again sends application data to the network entity 201. The network entity 201 now determines the period between the application data transfers. This period is the time B. The processor derives from this time B and the TAU timer signals a new TAU timer with a period D as a new periodic transmission time for the tracking area update requests for the user equipment device 202.

In response to the next tracking area update request, the processor 205 generates a control signal instructing the certain user equipment device 202 to amend the time of periodic transmission of the TAU request to time D. Time D is longer than time B, i.e. time D is longer than the period of the periodic application data transfers. After the certain user equipment device 202 sends the next TAU request in step 509, the network entity 201 transmits the control signal in step 510 in response to the TAU request of step 509 to set the new period D for the TAU timer and time D starts running for the user equipment device 202.

Time D is longer than time B. Therefore, the period of time B expires earlier than the new set tracking area update timer. Therefore, the user equipment device 202 sends application data and the TAU timer restarts. Before the TAU timer with the period D expires and the tracking area update request is transmitted, the timer B expires and the new application data transfer starts. This again resets the TAU timer. Therefore, as long as application data is sent, no TAU requests are transmitted by the certain user equipment device 202. This reduces data transfer in the communication network.

In order to enable this, the network entity 201 has to monitor the data path to evaluate if regularly after a TAU event the user equipment device 202 is transferring data.

Using narrow-band IUT, payload data is also transferred with the signaling. Signaling is transferred via the MME and therefore the above-described method leads to an improved use of the capacity of a communication network.

In another embodiment of the invention, the processor 205 of the network entity 201 transmits a control signal containing instructions to amend the transmitting time of the periodic status signals without instructing the user equipment device 202 to use a predetermined time value to amend the periodic transmissions. In this embodiment, the user equipment device uses a processor 206 to determine a random value for amending the periodic transmission time independently from extern predetermined values. The periodic signals are transmitted by a communication interface 207 to the network entity 201.

### LIST OF REFERENCE SIGNS

- 100, 400A, 400B: graph
- 101,401,402: peak
- 200: system
- 201: network entity
- 202, 203: user equipment device
- 204, 207: communication interface
- 205, 206: processor
- 403: minimum
- 404: area
- 300, 500: flow diagram
- 301-305: step
- 501-510: step
- A, B, C, D: time

## Claims

1. A network entity (201) for controlling communications of a plurality of user equipment devices (202, 203) in a communication network, each user equipment device (202, 203) being configured to periodically transmit a Tracking Area Update, TAU, to a MME (201) of the communication network, the network entity (201) comprising:
a communication interface (204) being configured to receive a first number of TAUs within a first reception interval and to receive a second number of TAUs within a second reception interval, wherein the first and the second reception interval are other time intervals that are non-overlapping and wherein the first number of TAUs comprises a TAU of a certain user equipment device (202); and
a processor (205) being configured to determine if the first number of TAUs is greater than the second number of TAUs and to generate a control signal instructing the certain user equipment device (202) to amend a time of periodic transmission of the status signal if the first number of TAUs is greater than the second number of TAUs;
and wherein
the communication interface (204) is configured to transmit the control signal over the communication network towards the certain user equipment device (202), wherein the communication interface (204) is configured to receive periodically transmitted application data from the certain user equipment device (202), and wherein the processor (205) is configured to:
wait (508) for the next transmission of the periodically transmitted application data from the certain user equipment device (202) and receive the periodically transmitted application data of said next transmission via the communication interface (204);
determine a period of the TAU of the certain user equipment device (202);
determine (508) a period of the periodically transmitted application data of the certain user equipment device (202) based on the said two receptions (505, 508) of periodically transmitted application data from the certain user equipment device (202);
set (508) a period value of the certain user equipment (204) to be longer than the determined period of the TAU of the certain user equipment (202),
in response to receiving (509) via the communication interface (204), a TAU request from the certain user equipment device (202), transmit (510), using the communication interface (204), a control signal that comprises the period value of the certain user equipment (204) and instruct the certain user equipment (204) to use the said period value as a new period of a TAU timer for sending TAU request.

2. The network entity (201) according to claim 1, wherein the network entity (201) is a mobility management entity or a cellular serving gateway node.

3. The network entity (201) according to one of the previous claims, wherein the processor (205) is configured to determine the kind of the tracking area update signal and to generate the control signal to instruct the certain user device to switch from a standard periodic tracking area update timer to a long periodic tracking area update timer if the standard periodic tracking area update timer is set.

4. The network entity (201) according to one of the previous claims, wherein the processor (205) is configured to generate the control signal based on a randomly determined value to amend the time of periodic transmission randomly.

5. The network entity (201) according to claim 4 wherein the processor (205) is configured to generate the control signal based on a randomly determined transmission time or a randomly determined time period.

6. The network entity (201) according to one of the preceding claims, wherein the processor (205) is configured to monitor the communication interface on the periodically transmitted application data signals after the control signal was transmitted and to further increase the time of periodic transmission of the TAU by generating a new control signal if the monitoring of the communication interface signals that TAUs are still received.

7. A method for controlling communications of a plurality of user equipment devices (202, 203) in a communication network, each user equipment device (202, 203) being configured to periodically transmit a Tracking Area Update, TAU, to a MME (201) of the communication network, the method comprising:
receiving (301) a first number of TAUs by a communication interface (204) within a first reception interval comprising a TAU of a certain user equipment device (202);
receiving (302) a second number of TAUs within a second reception interval by the communication interface (204), wherein the first and the second reception interval are other time intervals that are non-overlapping and wherein;
determining (303) if the first number of TAUs is greater than the second number of status signals by a processor (205);
generating (304) a control signal by a processor (205) of the MME (201), the control signal instructing the certain user equipment device (202) to amend a time of periodic transmission of the TAU when the first number of TAUs is greater than the second number of TAUs; and
transmitting the control signal over the communication network towards the certain user equipment device (202) by the communication interface (204);
receiving (505) periodically transmitted application data from the certain user equipment device (202) by the communication interface (204);
waiting (508) for the next transmission of the periodically transmitted application data from the certain user equipment device (202) and receiving the periodically transmitted application data of said next transmission by the communication interface (204);
determining, by the processor (205), a period of the TAU of the certain user equipment device (202);
determining (508), by the processor (205), a period of the periodically transmitted application data of the certain user equipment device (202) based on the said two receptions (505, 508) of periodically transmitted application data from the certain user equipment device (202);
setting (508), by the processor (205), a period value of the certain user equipment (204) to be longer than the determined period of the TAU of the certain user equipment (202);
in response to receiving (509), by the communication interface (204), a TAU request from the certain user equipment device (202), transmitting (510), by the communication interface (204), to the certain user equipment device (202), a control signal that comprises the period value of the certain user equipment (204) and instructing the certain user equipment (204) to use the said period value as a new period of a TAU timer for sending TAU request.

8. Computer program product with program code to execute the method according to claim 7 when the program code is being executed on a network entity.

## Patentansprüche

1. Netzwerkentität (201) zum Steuern von Kommunikationen mehrerer Benutzereinrichtungsvorrichtungen (202, 203) in einem Kommunikationsnetzwerk, wobei jede Benutzereinrichtungsvorrichtung (202, 203) dazu eingerichtet ist, periodisch eine Verfolgungsbereichsaktualisierung, Tracking Area Update, TAU, an eine MME (201) des Kommunikationsnetzwerks zu übertragen, wobei die Netzwerkentität (201) aufweist:
eine Kommunikationsschnittstelle (204), die dazu eingerichtet ist, eine erste Anzahl von TAU innerhalb eines ersten Empfangsintervalls zu empfangen und eine zweite Anzahl von TAU innerhalb eines zweiten Empfangsintervalls zu empfangen, wobei das erste und das zweite Empfangsintervall verschiedene Zeitintervalle sind, die einander nicht überlappen, und wobei die erste Anzahl von TAU eine TAU einer bestimmten Benutzereinrichtungsvorrichtung (202) umfasst; und
einen Prozessor (205), der dazu eingerichtet ist, zu bestimmen, ob die erste Anzahl von TAU größer als die zweite Anzahl von TAU ist, und ein Steuersignal zu erzeugen, das die bestimmte Benutzereinrichtungsvorrichtung (202) anweist, eine Zeit einer periodischen Übertragung des Statussignals zu ändern, wenn die erste Anzahl von TAU größer als die zweite Anzahl von TAU ist; und wobei
die Kommunikationsschnittstelle (204) dazu eingerichtet ist, das Steuersignal über das Kommunikationsnetzwerk an die bestimmte Benutzereinrichtungsvorrichtung (202) zu übertragen, wobei die Kommunikationsschnittstelle (204) dazu eingerichtet ist, periodisch übertragene Applikationsdaten von der bestimmten Benutzereinrichtungsvorrichtung (202) zu empfangen, und wobei der Prozessor (205) dazu eingerichtet ist:
auf die nächste Übertragung der periodisch übertragenen Applikationsdaten von der bestimmten Benutzereinrichtungsvorrichtung (202) zu warten (508) und die periodisch übertragenen Applikationsdaten der nächsten Übertragung über die Kommunikationsschnittstelle (204) zu empfangen;
eine Periode der TAU der bestimmten Benutzereinrichtungsvorrichtung (202) zu bestimmen;
eine Periode der periodisch übertragenen Applikationsdaten der bestimmten Benutzereinrichtungsvorrichtung (202) basierend auf dem zweimaligen Empfangen (505, 508) von periodisch übertragenen Applikationsdaten von der bestimmten Benutzereinrichtungsvorrichtung (202) zu bestimmen (508);
einen Periodenwert der bestimmten Benutzereinrichtung (204) derart einzustellen (508), dass der Periodenwert länger als die bestimmte Periode der TAU der bestimmten Benutzereinrichtung (202) ist,
als Reaktion auf das Empfangen (509) einer TAU-Anforderung von der bestimmten Benutzereinrichtungsvorrichtung (202) über die Kommunikationsschnittstelle (204) unter Verwendung der Kommunikationsschnittstelle (204) ein Steuersignal zu übertragen (510), das den Periodenwert der bestimmten Benutzereinrichtung (204) umfasst, und die bestimmte Benutzereinrichtung (204) anzuweisen, den Periodenwert als eine neue Periode eines TAU-Zeitgebers zum Senden einer TAU-Anforderung zu verwenden.

2. Netzwerkentität (201) nach Anspruch 1, wobei die Netzwerkentität (201) eine Mobilitätsverwaltungsentität oder ein zellularer Serving-Gateway-Knoten ist.

3. Netzwerkentität (201) nach einem der vorhergehenden Ansprüche, wobei der Prozessor (205) dazu eingerichtet ist, die Art des Verfolgungsbereichsaktualisierungssignals zu bestimmen und das Steuersignal zu erzeugen, um die bestimmte Benutzervorrichtung anzuweisen, von einem standardmäßigen periodischen Verfolgungsbereichsaktualisierungszeitgeber zu einem langen periodischen Verfolgungsbereichsaktualisierungstimer zu wechseln, wenn der standardmäßige periodische Verfolgungsbereichsaktualisierungstimer eingestellt ist.

4. Netzwerkentität (201) nach einem der vorhergehenden Ansprüche, wobei der Prozessor (205) dazu eingerichtet ist, das Steuersignal basierend auf einem zufällig bestimmten Wert zu erzeugen, um die Zeit einer periodischen Übertragung zufällig zu ändern.

5. Netzwerkentität (201) nach Anspruch 4, wobei der Prozessor (205) dazu eingerichtet ist, das Steuersignal basierend auf einer zufällig bestimmten Übertragungszeit oder einer zufällig bestimmten Zeitperiode zu erzeugen.

6. Netzwerkentität (201) nach einem der vorhergehenden Ansprüche, wobei der Prozessor (205) dazu eingerichtet ist, die Kommunikationsschnittstelle in Bezug auf die periodisch übertragenen Applikationsdatensignale zu überwachen, nachdem das Steuersignal übertragen wurde, und die Zeit einer periodischen Übertragung der TAU durch Erzeugen eines neuen Steuersignals weiter zu erhöhen, wenn das Überwachen der Kommunikationsschnittstelle signalisiert, dass die TAU weiterhin empfangen werden.

7. Verfahren zum Steuern von Kommunikationen mehrerer Benutzereinrichtungsvorrichtungen (202, 203) in einem Kommunikationsnetzwerk, wobei jede Benutzereinrichtungsvorrichtung (202, 203) dazu eingerichtet ist, periodisch eine Verfolgungsbereichsaktualisierung, Tracking Area Update, TAU, an eine MME (201) des Kommunikationsnetzwerks zu übertragen, wobei das Verfahren umfasst:
Empfangen (301) einer ersten Anzahl von TAU durch eine Kommunikationsschnittstelle (204) innerhalb eines ersten Empfangsintervalls, das eine TAU einer bestimmten Benutzereinrichtungsvorrichtung (202) umfasst;
Empfangen (302) einer zweiten Anzahl von TAU innerhalb eines zweiten Empfangsintervalls durch die Kommunikationsschnittstelle (204), wobei das erste und das zweite Empfangsintervall verschiedene Zeitintervalle sind, die einander nicht überlappen, und wobei;
Bestimmen (303), ob die erste Anzahl von TAU größer als die zweite Anzahl von Statussignalen ist, durch einen Prozessor (205);
Erzeugen (304) eines Steuersignals durch einen Prozessor (205) der MME (201), wobei das Steuersignal die bestimmte Benutzereinrichtungsvorrichtung (202) anweist, eine Zeit einer periodischen Übertragung der TAU zu ändern, wenn die erste Anzahl von TAU größer als die zweite Anzahl von TAU ist; und
Übertragen des Steuersignals über das Kommunikationsnetzwerk an die bestimmte Benutzereinrichtungsvorrichtung (202) durch die Kommunikationsschnittstelle (204) ;
Empfangen (505) periodisch übertragener Applikationsdaten von der bestimmten Benutzereinrichtungsvorrichtung (202) durch die Kommunikationsschnittstelle (204) ;
Warten (508) auf die nächste Übertragung der periodisch übertragenen Applikationsdaten von der bestimmten Benutzereinrichtungsvorrichtung (202) und Empfangen der periodisch übertragenen Applikationsdaten der nächsten Übertragung durch die Kommunikationsschnittstelle (204) ;
Bestimmen, durch den Prozessor (205), einer Periode der TAU der bestimmten Benutzereinrichtungsvorrichtung (202) ;
Bestimmen (508), durch den Prozessor (205), einer Periode der periodisch übertragenen Applikationsdaten der bestimmten Benutzereinrichtungsvorrichtung (202) basierend auf dem zweimaligen Empfangen (505, 508) von periodisch übertragenen Applikationsdaten von der bestimmten Benutzereinrichtungsvorrichtung (202);
Einstellen (508), durch den Prozessor (205), eines Periodenwerts der bestimmten Benutzereinrichtung (204) derart, dass der Periodenwert länger als die bestimmte Periode der TAU der bestimmten Benutzereinrichtung (202) ist;
als Reaktion auf das Empfangen (509), durch die Kommunikationsschnittstelle (204), einer TAU-Anforderung von der bestimmten Benutzereinrichtungsvorrichtung (202), Übertragen (510), durch die Kommunikationsschnittstelle (204), eines Steuersignals, das den Periodenwert der bestimmten Benutzereinrichtung (204) umfasst, an die bestimmte Benutzereinrichtungsvorrichtung (202) und Anweisen der bestimmten Benutzereinrichtung (204), den Periodenwert als eine neue Periode eines TAU-Zeitgebers zum Senden von TAU-Anforderungen zu verwenden.

8. Computerprogrammprodukt mit Programmcode zum Ausführen des Verfahrens nach Anspruch 7, wenn der Programmcode auf einer Netzwerkentität ausgeführt wird.

## Revendications

1. Entité de réseau (201) pour commander les communications d'une pluralité de dispositifs d'équipement d'utilisateur (202, 203) dans un réseau de communication, chaque dispositif d'équipement d'utilisateur (202, 203) étant configuré pour transmettre périodiquement une mise à jour de zone de suivi, TAU, à un MME (201) du réseau de communication, l'entité de réseau (201) comprenant :
une interface de communication (204) étant configurée pour recevoir un premier nombre de TAUs dans un premier intervalle de réception et pour recevoir un deuxième nombre de TAUs dans un deuxième intervalle de réception, dans lequel le premier et le deuxième intervalle de réception sont d'autres intervalles de temps qui ne sont pas superposés et dans lequel le premier nombre de TAUs comprend une TAU d'un certain dispositif d'équipement d'utilisateur (202); et
un processeur (205) étant configuré pour déterminer si le premier nombre de TAUs est supérieur au deuxième nombre de TAUs et pour générer un signal de commande donnant instruction au certain dispositif d'équipement d'utilisateur (202) de modifier un temps de transmission périodique du signal d'état si le premier nombre de TAU est supérieur au deuxième nombre de TAUs et dans lequel
l'interface de communication (204) est configurée pour transmettre le signal de commande sur le réseau de communication vers le certain dispositif d'équipement d'utilisateur (202), dans lequel l'interface de communication (204) est configurée pour recevoir des données d'application transmises périodiquement depuis le certain dispositif d'équipement d'utilisateur (202), et dans lequel le processeur (205) est configuré pour :
attendre (508) la prochaine transmission des données d'application périodiquement transmises depuis le certain dispositif d'équipement d'utilisateur (202) et recevoir les données d'application périodiquement transmises de ladite prochaine transmission via l'interface de communication (204) ;
déterminer une période de la TAU du certain dispositif d'équipement d'utilisateur (202) ;
déterminer (508) une période des données d'application transmises périodiquement du certain dispositif d'équipement d'utilisateur (202)
sur la base desdites deux réceptions (505, 508) des données d'application transmises périodiquement depuis le certain dispositif d'équipement d'utilisateur (202) ;
régler (508) une valeur de période du certain équipement d'utilisateur (204) afin d'être plus longue que la période déterminée de la TAU du certain équipement d'utilisateur (202), en réponse à la réception (509) via l'interface de communication (204), d'une demande de TAU provenant du dernier dispositif d'équipement d'utilisateur (202), transmettre (510), à l'aide de l'interface de communication (204), un signal de commande qui comprend la valeur de période du certain équipement d'utilisateur (204) et donner instruction au certain équipement d'utilisateur (204) d'utiliser ladite valeur de période en tant que nouvelle période d'un temporisateur de TAU pour envoyer une demande de TAU.

2. Entité de réseau (201) selon la revendication, dans laquelle l'entité de réseau (201) est une entité de gestion de mobilité ou un nœud de passerelle de desserte cellulaire.

3. Entité de réseau (201) selon une des revendications précédentes, dans laquelle le processeur (205) est configuré pour déterminer le type de signal de mise à jour de zone de suivi et pour générer le signal de commande pour donner instruction au certain dispositif d'utilisateur de passer d'un temporisateur de mise à jour de zone de suivi périodique standard à un temporisateur de mise à jour de zone de suivi périodique si le temporisateur de mise à jour de zone de suivi périodique standard est réglé.

4. Entité de réseau (201) selon une des revendications précédentes, dans laquelle le processeur (205) est configuré pour générer le signal de commande sur la base d'une valeur déterminée de manière aléatoire pour modifier le temps de transmission périodique de manière aléatoire.

5. Entité de réseau (201) selon la revendication 4, dans laquelle le processeur (205) est configuré pour générer le signal de commande sur la base d'un temps de transmission déterminé de manière aléatoire ou d'une période de temps déterminée de manière aléatoire.

6. Entité de réseau (201) selon une des revendications précédentes, dans laquelle le processeur (205) est configuré pour surveiller l'interface de communication sur les signaux de données d'application périodiquement transmis après la transmission du signal de commande et pour augmenter encore le temps de transmission périodique de la TAU en générant un nouveau signal de commande si la surveillance des signaux de l'interface de communication signale que les TAUs sont toujours reçues.

7. Procédé de commande des communications d'une pluralité de dispositifs d'équipement d'utilisateur (202, 203) dans un réseau de communication, chaque dispositif d'équipement d'utilisateur (202, 203) étant configuré pour transmettre périodiquement une mise à jour de zone de suivi, TAU, à un MME (201) du réseau de communication, le procédé comprenant de :
recevoir (301) un premier nombre de TAUs par une interface de communication (204) dans un premier intervalle de réception comprenant une TAU d'un certain dispositif d'équipement d'utilisateur (202) ;
recevoir (302) un deuxième nombre de TAUs dans un deuxième intervalle de réception par l'interface de communication (204), dans lequel le premier et le deuxième intervalle de réception sont d'autres intervalles de temps qui ne se superposent pas et dans lequel ;
déterminer (303) si le premier nombre de TAUs est supérieur au deuxième nombre de signaux d'état par un processeur (205) ;
générer (304) un signal de commande par un processeur (205) de la MME (201), le signal de commande donnant instruction au certain dispositif d'équipement d'utilisateur (202) de modifier un temps de transmission périodique de la TAU lorsque le premier nombre de TAUs est supérieur au deuxième nombre de TAUs et transmettre le signal de commande sur le réseau de communication vers le certain dispositif d'équipement d'utilisateur (202) par l'interface de communication (204) ;
recevoir (505) des données d'application transmises périodiquement depuis le certain dispositif d'équipement d'utilisateur (202) par l'interface de communication (204) ;
attendre (508) la prochaine transmission des données d'application périodiquement transmises depuis le certain dispositif d'équipement d'utilisateur (202) et recevoir les données d'application périodiquement transmises de ladite prochaine transmission par l'interface de communication (204) ;
déterminer, par le processeur (205), une période de la TAU du certain dispositif d'équipement d'utilisateur (202) ;
déterminer (508), par le processeur (205), une période des données d'application transmises périodiquemen du certain dispositif d'équipement d'utilisateur (202) sur la base desdites réceptions (505, 508) de données d'application transmises périodiquement à partir du certain dispositif d'équipement d'utilisateur (202) ;
régler (508), par le processeur (205), une valeur de période de certains équipements d'utilisateurs (204) afin d'être plus longue que la période déterminée de la TAU de certains équipements d'utilisateurs (202) ;
en réponse à la réception (509), par l'interface de communication (204), d'une demande de TAU du certain dispositif d'équipement d'utilisateur (202), transmettre (510), par l'interface de communication (204), au certain dispositif d'équipement d'utilisateur (202) un signal de commande qui comprend la valeur de période du certain équipement utilisateur (204) et donner instruction au certain équipement d'utilisateur (204) d'utiliser ladite valeur de période comme nouvelle période d'un temporisateur de TAU pour envoyer une demande de TAU.

8. Produit de programme informatique comportant un code de programme pour exécuter le procédé selon la revendication 7 lorsque le code de programme est en cours d'exécution sur une entité de réseau.
